# EUROPEAN PATENT SPECIFICATION

(11) **EP 2 222 604 B1**
(45) Date of publication and mention of the grant of the patent: **20.04.2016**
(21) Application number: 08855684.0
(22) Date of filing: 28.10.2008
(51) Int. Cl.: C02F 1/14, B01D 1/00, C02F 1/18

(54) **SOLAR POWERED AND FLOATING EVAPORATOR**
MIT SONNENENERGIE BETRIEBENER UND SCHWEBENDER VERDAMPFER
ÉVAPORATEUR FLOTTANT ALIMENTÉ PAR ÉNERGIE SOLAIRE

(30) Priority: 28.11.2007 DK 200701686
(43) Date of publication of application: 01.09.2010
(73) Proprietor: TJA Holding APS, 2970 Hørsholm (DK)
(72) Inventor: ANDERSEN, Tom, Juul, 26697 Hjärnarp (SE)
(74) Representative: Nielsen, Charlotte
(86) International application number: PCT/DK2008/000379
(87) International publication number: WO 2009/068030

(56) References cited:
- WO-A1-03/010093
- WO-A1-2006/057556
- WO-A1-2007/098534
- GB-A- 2 000 272
- US-A- 2 405 877
- US-A- 3 367 843
- US-A- 3 397 117
- US-A- 3 415 719
- US-A1- 2006 081 455
- US-B1- 6 440 275
- US-B1- 7 008 515

## Description

### Field of the invention

A flexible solar powered floating evaporator to be used e.g. for desalination and purification of water through distillation.

### Background of the invention

Several floating solar powered distillation solutions for freshwater production have earlier been described. WO8504159, US2004084357, DE19648322, DE4230162, DE3918427 and FR2661172 GB 2000272 all describe - as the present invention - proposed implementations of a solar evaporator as part of a distillation system.

Any solar based distillation system is based on evaporation and condensation. This is either done in the same area/ chamber (e.g. a water filled black box with a sloped glass roof) or separately (e.g. any sort of column distillation system). Advanced systems even add vacuum to the system and uses other energy recovery means.

Not many solar stills are on the market and most are land based. This is mainly because low efficiency (2-8 liter/day/m2) and high price of water (although solar power is free) due to installation and maintenance cost.

The dilemma for solar powered distillation systems is to choose between low tech with a need of large areas or high tech with a need of high tech technology and qualified maintenance.

Thus a solar evaporator for a distillation system with a relatively high yield, low technology and durable solution is presented here.
tors by providing an evaporator in which the body is flexible and therefore collapsible from an unfolded usage configuration to a collapsed resting configuration. Since the evaporator is collapsible, it may be used on open sea when the weather allows therefore, and be collapsed for safe storage in rough weather conditions or in general when not in use. Also since the evaporator is flexible, it can move with the wave movements in stead of having to withstand the movement.

In one embodiment, the floating evaporator is made to withstand wind, weather and waves at sea. Accordingly, the invention makes it possible to use the evaporator in places which is quite demanding. The floating evaporator may e.g. comprise a 3 layer construction comprising: a transparent, insulated upper wall, a middle evaporation chamber and a bottom insulated and heat absorbing black wall floating on the water surface.

In one embodiment, the evaporator is a flexible plastic construction that can be made industrially and rolled up on a tube (in some cases the air exhaust tube, see below) for easy transport and easy installation/ collection on location. Definition of rollable and expressing the flexibility of the evaporator is that the evaporator can be rolled up on a tube with a diameter from 10cm and upwards.

The evaporator's upper insulated wall could be made of clear, flexible and UV-stabilised plastic. The plastic may be reinforced with fibre mesh for stability. The construction may be a double wall and air filled construction, e.g. in form of bubble plastic or other forms. Total thickness of the wall may be in the range of 0,5 cm - 5 cm, where the outer/inner layer of the wall may be a plastic foil with a thickness between 0,1-1 mm. This insulation may be utilised to avoid condensation on the inner side of the upper wall and to ensure as high temperature inside the evaporation chamber as possible despite the chill effect of the outside wind. The insulation value of the upper wall may be in the range of 1-4U and should withstand temperatures up to 80 degrees C. The form of the upper wall may be flat towards an outer surface but could also be designed with a profile to increase the surface area and in general to optimize the capture of solar energy.

A rather large amount of the energy is reflected on a flat surface when the angle is not perpendicular to the sun. Accordingly, the surface may comprise a pattern with surface portions raised to an angle in the range of 30-60 degrees, e.g. 45 degrees to the horizontal angle, e.g. so that the angle of incidence of the solar radiation may become essentially perpendicular to the surface portions at least within some time frames of the day.

The evaporator's lower insulated wall could be made of water tolerant material able to stay afloat (e.g. foam with closed cells and of salt water resistant material made of e.g. PE, EPDM, PU etc). The lower wall may as well be strengthened through mesh to withstand the movements in water but flexible enough to follow the movement of waves. Flexibility should be corresponding to that of the upper wall, so that the evaporator as a whole moves as one. In one embodiment the lower wall is permeable to water, so that the water can enter the chamber and then be evaporated. This may be achieved through a number of holes in the wall or through devices connecting the chamber with the water onto which the evaporator floats. The degree of permeability in the lower wall - not restricted to how this is achieved - should correspond to a number of the following parameters: The size of the evaporator, the degree of insulation in the evaporator, the effectiveness of the condenser structure, the amount/size of impurities in the water and the need for periodic cleaning. Average amount of water may be 5-10 l/m2/hour.

The chamber comprises a structure which increases an inner surface area of the chamber. In one embodiment, the chamber comprises a heat absorbing, hydrophilic, black and UV-tolerant wick/fleece. The wick/fleece could be integrated (pressed, glued etc) to the chamber's inner side of the lower wall. The hydrophilic wick/fleece in the chamber is wetted with sea water and when absorbing the solar energy, evaporation between the 2 isolated upper and lower walls is allowed. The wick/fleece could be a non-organic and UV stabilized fleece/wick and since surface area is important for evaporation it could be arranged in a way so that the surface area is as large as possible. This may imply that the wick/fleece has a non flat surface, e.g. a zig-zag surface, a curled surface, a waved surface or a surface with any kind of surface texture

Hence non-organic fleece/wick by nature is not hydrophobic, the mechanical structure of the wick could allow a capillary effect and thereby allow wetting.

The evaporator has in the preferred one embodiment of the invention 3 different spacers that are to be placed between the upper and lower wall. They are relatively more rigid then the evaporators upper and lower wall. They may be formed as an integrated one part (moulded, glued or otherwise connected to) of the evaporator's walls, e.g. to be delivered to the costumer already fixed in place, or they could be delivered separately and individually attachable to the structure. This further facilitates disassembly of the structure, e.g. if the evaporator is shipped to a supplier for repair or overhaul.

The first spacer may have at least 4 functions:
to keeping the upper/lower wall apart,
to lower the upper wall to an angle by which water is drained off from the upper wall in rainy weather or during rough weather conditions,
to facilitate easy assembly/ disassembly of the evaporator,
to allow entrance of small quantities of water into the chamber between the upper/lower wall.

All spacers could be assembled through threads, e.g. they could be tied or glued to the walls. They could also be attached by screws, rivets, or in any other way.

The first spacer could be hollow and tubular. It could be made of a synthetic material such as plastic. In at least one of its axially opposite ends, it could be provided with a flange, shoulder or similar structure with increased diameter. This structure may squeeze or press against outer surfaces of the walls and thereby press the walls towards each other and thereby stiffen and maintaining the structure of the evaporator as such.

The spacer could be made of saltwater tolerant and UV stabilised plastic e.g. but not restricted to PE, PP or PUR. The side facing the water may form an elongated open tube into which the saltwater for the chamber is allowed to enter. The elongated tube, designed for sub surface water intake is necessary to avoid filling the chamber with unwanted floating fluids, such as oil and other floating elements, such as vegetation.

The water intake may comprise one or more holes in the spacer's in side walls of the spacers. The holes may be spaced apart to allow entrance of water over a larger area. The holes are placed in such a way that excess water in the chamber will drain off by gravity and when the evaporator is moved by waves, the simple movement will scoop in water in small amounts. The constant flow of water will provide wetting of the fleece and ensure that sediments, salt crystals and other solid particles are flushed out of the evaporator.

The second spacer could be slightly longer than the first spacer, so that the form of the upper wall of the evaporator will form a sloping profile against the first spacers, thereby allowing water (rain, waves etc) to drain off. This spacer may form a closed tube with attachment plugs to hold the walls in place and cause as little wear as possible. This spacer can be fitted with an upward pointing device for holding a protective mesh or net to avoid birds to land on the evaporator's surface.

The third spacer could be similar to the first spacer, but only with relatively large air inlet openings in the middle section of the spacer's tube. This feature is the one part of the ventilation structure of the evaporator, the other is the exhaust tube, see below. The openings could point into the chamber of the evaporator. This third spacer is always to be placed at a distance from the air outlet, e.g. furthest possibly away from the air outlet device of the evaporator.

For strengthening reasons, the upper and lower foil of the evaporator has a reinforced pad with holes for inserting/mounting the spacers. The reinforcement pads can be glued or physically attached to the foil.

Further, the evaporator has a rim, e.g. an inflatable tube, to keep the evaporator stretched out. Depending on size even more inflatable tubes within the outer rim may be needed to keep the whole stable and stretched at all times.

The surface of the evaporator may be increased simply by connecting 2 or more evaporators. In one embodiment 2 evaporators are connected to each other and share the same air outlet.

Further the evaporation devise could be connected to an air outlet from which the air is pumped into the condenser device. In one embodiment, the air outlet comprises a tube with holes in the sides pointing into the chamber of the evaporator. The tube may e.g. be lengthwise attached to the evaporator, so that the tube is connected to or inserted into the space between the upper and lower walls. When the air is sucked out from the inside of the evaporator by a ventilator, the air is hot and the relative humidity will be close to 100%.

The evaporator may comprise boards to walk on for inspection/maintenance, a string net to avoid birds to rest on and spoil the platform, under water weights to keep the device on the water in windy weather, warning signs and other security necessities.

Transport, assembly and maintenance: The evaporator can be rolled up on the air outlet tube for easy transport. With a number of spacers, air inlets and a rim the evaporator can be assembled on site. Assembly is simply to inflate the rim and the 2 walls are rolled out and fitted with the spacers. At the far end of the air outlet, the air inlet spacers are placed. The walls are attached to the rim with flexible webbing and thereby stretched out.

For maintenance the evaporator can be disassembled in the reverse way. In this way it can be cleaned on the inside or the upper wall (restricted life time due to hostile environment) can be exchanged. In hard weather the evaporator can be rolled up and elevated from sea level for protection.

For flushing and cleaning of the inside of the evaporator, the simple rolling up will force water in and out of the chamber and result in a cleaning. This can be done automatically or manually initiated.

The size of the evaporator related to the desired amount of condensate. A small system would comprise a 50 m2 evaporator. A large system with one or more connected evaporators would comprise a 5000-10000m2 or bigger evaporator. With a distance of 20cm between upper and lower wall the air volume in a 1000m2 evaporator would be 200m3. Local weather conditions will also limit the size.

1 m2 of evaporator will under perfect conditions give between 4-8/l of condensate (distilled water) pr day. Temperatures of 80 C° on the surface of the wetted fleece/wick inside the evaporator are easily achieved through the isolated design and the thin film of water in the fleece/wick is therefore easily evaporated.

The shape of the evaporator can be of any form but the longer distance between inlet and outlet of the air stream. A forced way of the air stream in the chamber of the evaporator resulting in a longer travel for the air stream and no areas with any movement of air will further enhance performance.

The spacing between the upper and lower wall of the evaporator is relatively small, but big enough to have effective air passage and not collapse due to the vacuum ) from the ventilation. The distance could be 5-30 cm or more. The upper wall being isolated could e.g. be between 0,5 to 3 cm thick and the lower wall likewise. The spacers may have a similar thickness and the tube diameter of the spacers would be app 40-100 mm. The air intake spacers would preferably have a larger diameter - e.g. 100 - 300 mm - than the spacers to obtain as little resistance (pressure loss) as possible for transport of the air stream. The sub surface water intake tube could be at least 20-40 cm long. This tube may be fitted with a coarse filter to avoid sea life getting into the tube and ultimately into the chamber of the evaporator.

All components could be isolated to avoid condensation before the air stream reaches the condenser. All of the above sizes are examples and are not restricted to the mentioned measures.

When possible (at open sea) the evaporator could be free to turn 360° around a fixation point. This fixation point could be the condenser or a simple fixation point. When the wind turns the evaporator, the system is less influenced by the forces of waves and wind, and it may be designed to withstand less forces. It is an advantage to provide a pivot structure which facilitates that the wind is capable of turning the evaporator to the most energy effective angle, namely with its longest length in the wind direction. Being relatively aerodynamic and flexible, not much strength is needed to hold the system in place. The system may comprise a possibility to roll the evaporator up and elevate the evaporator from waves during bad weather.

The exhaust system of the evaporator can be made in various ways, but is always pointing upwards (to avoid the surrounding water to enter the air stream) and always isolated (to prevent condensation before wanted).

The evaporator rim could be fitted with means for proper warning (colourings, signs, lamps etc) for the local traffic. For better solar energy capture, reflectors along the rim of the evaporator can be fitted. This feature may be a part of the rim or a separate device to the evaporator.

The evaporator can also be fitted with a net/mesh placed over the evaporator's surface to assure that birds do not land on the surface and pollute or destroy the relatively sensitive upper wall. This net can be held up by optional means for attachment for the spacers of the present invention.

### Other system components

The evaporator is to be connected to a condenser structure. In principle any condenser can be used and connected to the evaporator.

In one embodiment of the invention, a partly submerged condenser that is held in place by the sea floor and that uses the surrounding water for cooling is presented. Water is a very efficient heat conductor and will hence condense the water vapour from the evaporator. In this way the system is energy neutral, not accounting the energy for the movement of air from the evaporator's chamber to the condenser.

The movement of air from the evaporator and the condenser can be solar cell powered ventilator and in the most simple configuration without the need of batteries. The fan only needs to run when the sun shines. The capacity (m3 of air pr hour) of the fan relates to the area of the evaporator device/ the condenser, the pressure loss through the system and the degree of moisture saturation in the air in the evaporators chamber.

The design of the attachment to the sea floor in the preferred embodiment of the condenser is proposed to be in sea water tolerant concrete and in the shape of a sea windmill base. The whole system could be installed into and unto a sea based windmill.

The system may also comprise a simple regulator with an algorithm that optimises the airflow with respect to the 2 important factors: Temperature of the water surrounding the condenser, temperature and moisture saturation in the evaporator device.

The system also may include a simple UV lamp/ and or a ozone device in the fresh water tank to control potential bacteria growth.

The condenser, in one embodiment, may include a spray system to circulate cleaning fluid (e.g. chlorine) inside, so that the whole surface of the piping, tank and condensation baffles can be cleaned for bacteria growth. No flora is expected hence the condenser is opaque.

### Brief description of the drawings

Fig. 1 presents a sideway view of systems with the floating evaporation devise connected to a variety of condenser types A: submerged condenser standing on the sea floor, B: submerged condenser floating but attached to the sea floor and C: an on shore condenser
Fig. 2 presents a system viewed from above showing the evaporator, the swivel, the air outlet beam and the connection to the condenser.
Fig 3 presents a cross section of the evaporator and the 3 different spacers.

### Detailed description of preferred embodiments

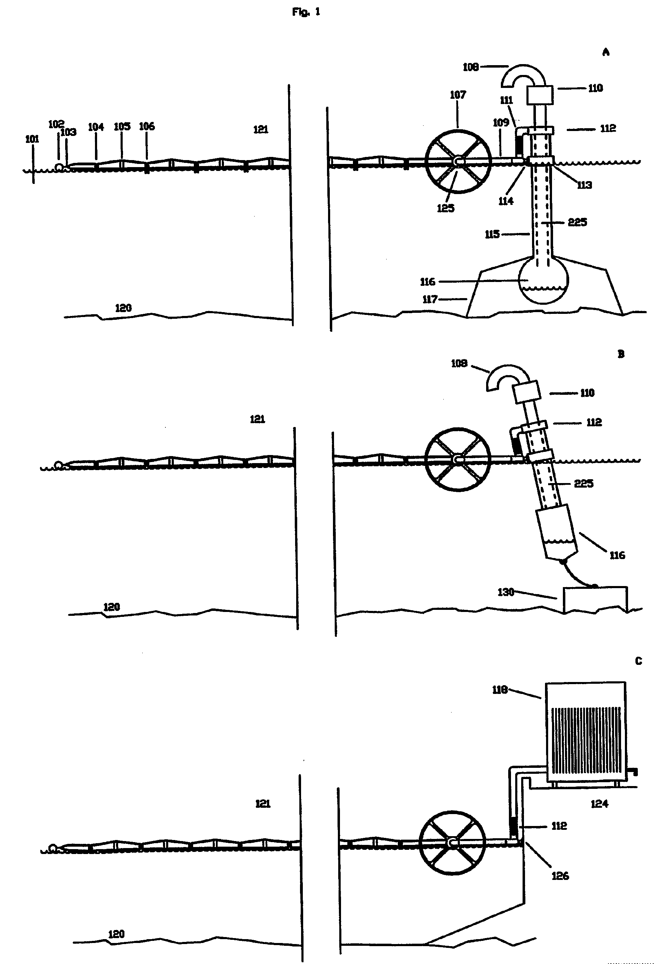

Fig. 1 illustrates an embodiment of 3 different system setups (seen sideways) with the same evaporator: A sea (101) based system (121) with a rigid and on the sea floor (120) resting condensation device, a sea based system (121) with a sea floor (120) fixed but floating condensation device and a land based system (123) with a condensation device standing ashore (124).

The evaporator body is attached to a floating rim (102) which could be a flexible air filled tube. To the rim (102) a string (103) is connecting the evaporator to the rim.

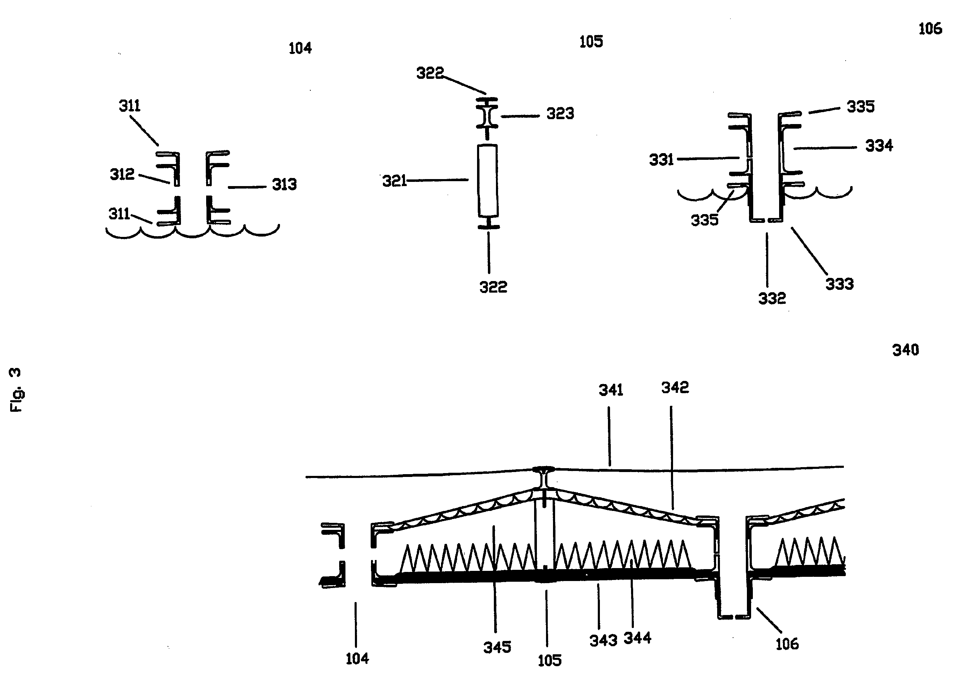

In the evaporator the 3 spacers are presented (see fig 3.) being air intake (104), height and inclination spacer (105) and drainage/water inlet/outlet (106).

At the opposite end of the evaporator's air intake an air exhaust tube (125) is placed and connected to the condenser (108) through a fork shaped and hollow, insulated tube connection (109) and a flexible, upward pointing tube (111) to the air intake(112)of the condenser. The air intake (112) of the condenser follows the evaporator's rotation around this point.

The evaporator's air exhaust tube (125) is the rotation axis when the evaporator is to be rolled up. In order not to damage the flexible evaporator (121) the exhaust tube (125) is fitted with a wheel (107) to guide the evaporator when being rolled up or out.

The connection to the condenser (or any fixation stand) is a hinge (114) allowing movement up/down and sideways following the wave movements. The connection (113) to the condenser is a ring (113) allowing the evaporator to rotate freely around this point.

Below surface the air stream from the evaporator is condensed on the colder surface of the condenser (115). The distillate runs off by gravity and is gathered internally in the condenser's fresh water chamber (116). The condenser is placed onto a rigid construction (117) of e.g. concrete on the sea floor (120).

The condenser comprises an exhaust tube (125) and a ventilator (110) for movement of air through the whole of the system.

In the second system (121) the condenser (108) is similar to (121) but it is floating and connected to the sea floor (120) through an anchor or concrete block (130)

In the third system (123) the fixation system is different. The hinge (126) does not rotate freely around it's own axis. The condenser (118) - air cooled or water cooled - is standing ashore or a floating vessel (124).

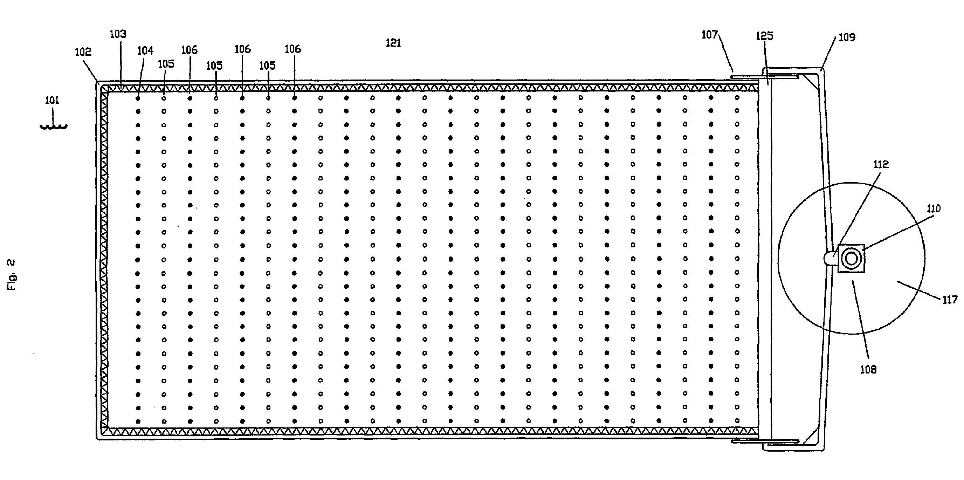

Fig. 2. illustrates the proposed systems (121) seen from above: A sea (101) based floating system (121) comprising rim (102), string attachments (103), In the evaporator the 3 spacers are presented (see fig 3.) being air intake (104), height and inclination spacer (105) and drainage/water inlet/outlet (106). As in figure 1 the air exhaust tube (125) and the guide wheels (107), the fork shaped and hollow, insulated tube connection (109) to the air intake (112) of the condenser (108). The air intake (112) of the condenser follows the evaporator's rotation around this point.

Fig. 3. illustrates a cross section of the evaporator walls and 3 different spacers.
(104) is the air intake spacers to be placed the furthest away from the outtake tube of the system. The spacer consist of a middle tube (312) in which the air intake holes (313) are placed. For connection to the upper and lower wall of the evaporator, flanges (311) are inserted to compress the walls to the middle tube of the spacer (104)
(105) is the longer spacer that elevates the surface of the evaporator and thereby allowing drainage og water and better capture of the solar energy. The middle tube (321) is applied with 2 flanges (322) to compress the walls to the middle tube of the spacer (104). The extender (323) is to be used if a net/mesh covering the evaporator is wanted. The extender is then attached to the middle tube (321) and e net/mesh is compressed between the extender (323) and the flange (322).
(106) is the spacer with 4 functions: Spacer, drainage of water intake and sub level water intake. The middle tube (331) is extended to below sea level (333) and a hole (332) allows water to enter the tube. At sea level another hole (331) allows water to enter/exit the chamber of the evaporator. The open middle tube (334) allows drainage of water from the upper side of the evaporator. Flanges (335) compress the walls of the evaporator to the middle tube (334).
(340) shows a cross section of the evaporator with mounted spacers (104-105 and 106). A net/mesh (341) is illustrated to avoid wildlife to rest on the evaporator. The upper insulated and transparent wall of the evaporator (342) is here illustrated to be in shape of bubble plastic with 2 outer layers of plastic. The lower wall of the evaporator (343) is foam with closed cells. In the chamber (345) of the evaporator a black fleece/wick (344) is illustrated with a non-flat profile to enhance the wetted evaporation surface area.

## Claims

1. A floating solar evaporator (121) comprising a body with a density which is lower than that of water, the body forming an evaporation chamber (345) between an upper wall part (342) which is permeable to solar light and an opposite lower opaque wall part (343), the body further forming a channel structure (106) permitting water to enter the evaporation chamber (345), **characterised in that** the body is flexible and therefore collapsible from an unfolded usage configuration to a collapsed resting configuration and that the evaporator (121) comprises a ventilation structure (104, 109, 345) permitting exchange of air in the evaporation chamber (345), where the ventilation structure (104, 109, 345) comprises at least one air inlet opening (104) and at least one air outlet opening, the outlet opening comprising coupling means for providing fluid communication between the evaporation chamber (345) and a condenser (108, 118), wherein the walls (342,343) are assembled by at least one spacer (105), wherein at least one spacer (105) extends through at least the lower wall (343) and further downwards into the water in a mounted state and forms an opening which allows water collected below surface to enter the evaporation chamber (345).

2. An evaporator (121) according to claim 1, wherein the upper (342) and lower walls (343) are insulated for encapsulation of solar thermal energy between the walls (342, 343).

3. An evaporator (121) according to claims 1 or 2, wherein the walls (342, 343) are made of flexible and elastically deformable material.

4. An evaporator (121) according to any of the preceding claims, wherein the body of the evaporator (121) is configured to be rolled up.

5. An evaporator (121) according to any of the preceding claims, wherein the upper wall (342) is provided with an upper surface which is inclined relative to a horizontal plane when the body floats on water, the inclined surface facilitating drainage of water off from the outer upper wall (342).

6. An evaporator (121) according to any of the preceding claims, where the lower wall (343) is permeable to water.

7. An evaporator (121) according to any of the preceding claims, where the evaporation chamber (345) comprises a fibre-material increasing an inner evaporation surface area.

8. An evaporator (121) according to any of the preceding claims, wherein the spacer(s) extends between inner surfaces of the walls (342, 343) and keep these separated.

9. An evaporator (121) according to any of the preceding claimss, wherein the spacer(s) (104, 105, 106) is rigid relative to the walls (342, 343).

10. An evaporator (121) according to any of the preceding claims, wherein at least one spacer (106) extends through the upper (342) and lower walls (343) and forms a conduit across the body to allow water to drain off from an upper surface of the evaporator (121).

11. An evaporator (121) according to any of the preceeding claims, wherein at least one spacer (104, 105, 106) forms part of at least one of the upper (342) and lower walls (343).

12. An evaporator (121) according to any of the preceding claims, comprising a fixation stand (124) and a hinged connection (126) between the body and the fixation stand (124) to enable rotation of the body relative to the stand (124).

13. An evaporator (121) according to any of the preceding claims, where the air outlet (111) forms a passage which is inclined relative to a horizontal plane when the body floats on water.

14. An evaporator (121) according to any of the preceding claims, further comprising a floating stand (108) to which the body is pivotally connected.

15. An evaporator (121) according to claim 12 and 14, wherein the stand (108) comprises a condenser structure (108, 110, 112, 116).

## Patentansprüche

1. Schwimmender solarbetriebener Verdampfer (121) umfassend einen Körper mit einer Dichte, die niedriger ist als jene von Wasser, wobei der Körper eine Verdampfungskammer (345) zwischen einem oberen Wandteil (342), der für Sonnenlicht durchlässig ist, und einem gegenüberliegenden, opaken unteren Wandteil (343) bildet, wobei der Körper des Weiteren eine Kanalstruktur (106) bildet, die den Eintritt von Wasser in die Verdampfungskammer (345) erlaubt, **dadurch gekennzeichnet, dass** der Körper flexibel und daher aus einer auseinandergefalteten Verwendungskonfiguration in eine zusammengefaltete Ruhekonfiguration zusammenlegbar ist, und dass der Verdampfer (121) eine Belüftungsstruktur (104, 109, 345) umfasst, die den Austausch von Luft in der Verdampfungskammer (345) erlaubt, wobei die Belüftungsstruktur (104, 109, 345) zumindest eine Lufteinlassöffnung (104) und zumindest eine Luftauslassöffnung umfasst, wobei die Auslassöffnung Kopplungsmittel zur Bereitstellung einer Fluidverbindung zwischen der Verdampfungskammer (345) und einem Kondensator (108, 118) umfasst, wobei die Wände (342, 343) durch zumindest einen Abstandshalter (105) zusammengebaut sind, wobei zumindest ein Abstandshalter (105) sich in einem montierten Zustand durch zumindest die untere Wand (343) und weiter nach unten in das Wasser erstreckt und eine Öffnung bildet, die unter der Oberfläche gesammeltem Wasser erlaubt, in die Verdampfungskammer (345) einzutreten.

2. Verdampfer (121) nach Anspruch 1, wobei die oberen (342) und unteren Wände (343) isoliert sind, um Solarwärmeenergie zwischen den Wänden (342, 343) einzukapseln.

3. Verdampfer (121) nach den Ansprüchen 1 oder 2, wobei die Wände (342, 343) aus einem flexiblen und elastisch verformbaren Material hergestellt sind.

4. Verdampfer (121) nach einem der vorhergehenden Ansprüche, wobei der Körper des Verdampfers (121) so ausgebildet ist, dass er aufgerollt werden kann.

5. Verdampfer (121) nach einem der vorhergehenden Ansprüche, wobei die obere Wand (342) mit einer oberen Oberfläche versehen ist, die relativ zu einer horizontalen Ebene geneigt ist, wenn der Körper auf Wasser schwimmt, wobei die geneigte Oberfläche das Ablaufen von Wasser von der oberen Außenwand (342) erleichtert.

6. Verdampfer (121) nach einem der vorhergehenden Ansprüche, wobei die untere Wand (343) wasserdurchlässig ist.

7. Verdampfer (121) nach einem der vorhergehenden Ansprüche, wobei die Verdampfungskammer (345) ein Fasermaterial umfasst, das einen inneren Verdampfungsoberflächenbereich vergrößert.

8. Verdampfer (121) nach einem der vorhergehenden Ansprüche, wobei der/die Abstandshalter sich zwischen Innenflächen der Wände (342, 343) erstreckt/erstrecken und diese getrennt hält/halten.

9. Verdampfer (121) nach einem der vorhergehenden Ansprüche, wobei der/die Abstandshalter (104, 105, 106) relativ zu den Wänden (342, 343) steif ist/sind.

10. Verdampfer (121) nach einem der vorhergehenden Ansprüche, wobei zumindest ein Abstandshalter (106) sich durch die oberen (342) und unteren Wände (343) erstreckt und einen Kanal durch den Körper bildet, um Wasser zu erlauben, von einer oberen Oberfläche des Verdampfers (121) abzulaufen.

11. Verdampfer (121) nach einem der vorhergehenden Ansprüche, wobei zumindest ein Abstandshalter (104, 105, 106) einen Teil von zumindest einer der oberen (342) und unteren Wände (343) bildet.

12. Verdampfer (121) nach einem der vorhergehenden Ansprüche, umfassend einen Fixierständer (124) und eine gelenkige Verbindung (126) zwischen dem Körper und dem Fixierständer (124), um die Drehung des Körpers relativ zu dem Ständer (124) zu ermöglichen.

13. Verdampfer (121) nach einem der vorhergehenden Ansprüche, wobei der Luftauslass (111) einen Durchgang bildet, der relativ zu einer horizontalen Ebene geneigt ist, wenn der Körper auf dem Wasser schwimmt.

14. Verdampfer (121) nach einem der vorhergehenden Ansprüche, des Weiteren umfassend einen schwimmenden Ständer (108), der schwenkbar mit dem Körper verbunden ist.

15. Verdampfer (121) nach Anspruch 12 und 14, wobei der Ständer (108) eine Kondensatorstruktur (108, 110, 112, 116) umfasst.

## Revendications

1. Évaporateur solaire flottant (121) comprenant un corps ayant une densité qui est inférieure à celle de l'eau, le corps formant une chambre d'évaporation (345) entre une partie de paroi supérieure (342) qui est perméable à la lumière solaire et une partie de paroi inférieure opaque opposée (343), le corps formant en outre une structure de canal (106) permettant à l'eau d'entrer dans la chambre d'évaporation (345), **caractérisé en ce que** le corps est souple et donc pliable d'une configuration d'utilisation dépliée à une configuration de repos pliée et que l'évaporateur (121) comprend une structure de ventilation (104, 109, 345) permettant un échange d'air dans la chambre d'évaporation (345), où la structure de ventilation (104, 109, 345) comprend au moins une ouverture d'entrée d'air (104) et au moins une ouverture de sortie d'air, l'ouverture de sortie comprenant un moyen de couplage pour assurer une communication fluidique entre la chambre d'évaporation (345) et un condenseur (108, 118), où les parois (342, 343) sont assemblées par au moins une entretoise (105), où au moins une entretoise (105) s'étend à travers au moins la paroi inférieure (343) et encore vers le bas dans l'eau dans un état monté et forme une ouverture qui permet à l'eau recueillie en dessous de la surface d'entrer dans la chambre d'évaporation (345).

2. Évaporateur (121) selon la revendication 1, dans lequel les parois supérieure (342) et inférieure (343) sont isolées pour l'encapsulation de l'énergie solaire thermique entre les parois (342, 343).

3. Évaporateur (121) selon la revendication 1 ou 2, dans lequel les parois (342, 343) sont réalisées en un matériau souple et élastiquement déformable.

4. Évaporateur (121) selon l'une des revendications précédentes, dans lequel le corps de l'évaporateur (121) est configuré pour être enroulé.

5. Évaporateur (121) selon l'une des revendications précédentes, dans lequel la paroi supérieure (342) est munie d'une surface supérieure qui est inclinée par rapport à un plan horizontal lorsque le corps flotte sur l'eau, la surface inclinée facilitant l'évacuation de l'eau de la paroi supérieure externe (342).

6. Évaporateur (121) selon l'une des revendications précédentes, dans lequel la paroi inférieure (343) est perméable à l'eau.

7. Évaporateur (121) selon l'une des revendications précédentes, dans lequel la chambre d'évaporation (345) comprend un matériau de fibre augmentant une surface d'évaporation interne.

8. Évaporateur (121) selon l'une des revendications précédentes, dans lequel la/les entretoise(s) s'étend/s'étendent entre des surfaces internes des parois (342, 343) et maintient/maintiennent celles-ci séparées.

9. Évaporateur (121) selon l'une des revendications précédentes, dans lequel la/les entretoise(s) (104, 105, 106) est/sont rigide(s) par rapport aux parois (342, 343).

10. Évaporateur (121) selon l'une des revendications précédentes, dans lequel au moins une entretoise (106) s'étend à travers les parois supérieure (342) et inférieure (343) et forme un conduit à travers le corps pour permettre à l'eau de s'évacuer d'une surface supérieure de l'évaporateur (121).

11. Évaporateur (121) selon l'une des revendications précédentes, dans lequel au moins une entretoise (104, 105, 106) fait partie d'au moins l'une parmi les parois supérieure (342) et inférieure (343).

12. Évaporateur (121) selon l'une des revendications précédentes, comprenant un support de fixation (124) et un une connexion articulée (126) entre le corps et le support de fixation (124) pour permettre la rotation du corps par rapport au support (124).

13. Évaporateur (121) selon l'une des revendications précédentes, dans lequel la sortie d'air (111) forme un passage qui est incliné par rapport à un plan horizontal lorsque le corps flotte sur l'eau.

14. Évaporateur (121) selon l'une des revendications précédentes, comprenant en outre un support flottant (108) auquel le corps est relié en pivotement.

15. Évaporateur (121) selon les revendications 12 et 14, dans lequel le support (108) comprend une structure de condenseur (108, 110, 112, 116).
